# EUROPEAN PATENT APPLICATION

(11) **EP 4 712 031 A1**
(43) Date of publication of application: **18.03.2026**
(21) Application number: 24802792.2
(22) Date of filing: 25.04.2024
(51) Int. Cl.: G06T 13/40

(54) **EXPRESSION IMAGE GENERATION METHOD AND APPARATUS, AND ELECTRONIC DEVICE AND READABLE STORAGE MEDIUM**

(30) Priority: 06.05.2023 CN 202310505294
(71) Applicant: Beijing Zitiao Network Technology Co., Ltd., Beijing 100190 (CN)
(72) Inventor: SHU, Siqi, Beijing 100028 (CN); SUN, Yiping, Beijing 100028 (CN)
(74) Representative: Isarpatent
(86) International application number: PCT/CN2024/089804
(87) International publication number: WO 2024/230507

(57) **Abstract**

The present application disclosed an emoji image generation method and apparatus, an electronic device and a readable storage medium, and relates to the field of communications technologies. The emoji image generation method includes, on a first user side: receiving a first input in response to acquiring the initial media content, the first input is configured for triggering generation of a first emoji, the first emoji is an emoji image generated based on the initial media content, the emoji image is configured for editing and/or sending target content, and the initial media content includes a captured content and/or an uploaded content; displaying target information in response to the first input, wherein the target information is associated with the first emoji.

## Description

### CROSS REFERENCE TO RELATED APPLICATIONS

The present application is based on and claims priority from CN Patent Application No. 202310505294.2 filed on May 6, 2023, the disclosure of which is incorporated by reference herein in its entirety.

### TECHNICAL FIELD

The present application relates to the field of communications technologies, and in particular, to an emoji image generation method and apparatus, an electronic device and a readable storage medium.

### BACKGROUND

With the continuous development of electronic communication technology, users can often use various emojis to comment on works or communicate with other users in the process of applying various internet platforms.

### SUMMARY

The present application aims to provide an emoji image generation method and apparatus, an electronic device and a readable storage medium.

In a first aspect, embodiments of the present application provide an emoji image generation method, and on a first user side, the method includes: receiving a first input in response to acquiring the initial media content, the first input is configured for triggering generation of a first emoji, the first emoji is an emoji image generated based on the initial media content, the emoji image is configured for editing and/or sending target content, and the initial media content includes a captured content and/or an uploaded content; and displaying target information in response to the first input, and the target information is associated with the first emoji.

In a second aspect, embodiments of the present application provide emoji image generation apparatus, and on a first user side, the emoji image generation apparatus includes: a receiving module configured for receiving a first input in response to acquiring the initial media content, the first input is configured for triggering generation of a first emoji, the first emoji is an emoji image generated based on the initial media content, the emoji image is configured for editing and/or sending target content, and the initial media content includes captured content and/or uploaded content; a display module configured for displaying target information in response to the first input, and the target information is associated with the first emoji.

In a third aspect, embodiments of the present application provide an electronic device, and the electronic device includes: a memory having a program or instructions stored thereon; a processor, when executing the program or instructions, implementing the steps of the emoji image generation method of the first aspect.

In a fourth aspect, embodiments of the present application provide a readable storage medium on which a program or instructions are stored, and the program or instructions, when executed by a processor, implement the steps of the emoji image generation method of the first aspect.

In a fifth aspect, embodiments of the present application provide a chip, which includes a processor and a communication interface, the communication interface is coupled with the processor, and the processor is used for executing programs or instructions to realize the steps of the emoji image generation method of the first aspect.

In a sixth aspect, embodiments of the present application provide a computer program product including a computer program, and the computer program when executed by a processor implements the steps of the emoji image generation method of the first aspect.

In a seventh aspect, embodiments of the present application provide a computer program, and the computer program, when executed by a processor, implements the steps of the emoji image generation method of the first aspect.

In the embodiment of the present application, after a user uploads the initial media content when the user posts works or chats with other users, or captures the initial media content, the first user side can automatically generate the corresponding first emoji based on the initial media content in response to the first input, and displays the target information to prompt the user.

### BRIEF DESCRIPTION OF THE DRAWINGS

Fig. 1 illustrates a schematic flow chart illustrating an emoji image generation method provided by an embodiment of the present application;
Fig. 2 illustrates a first schematic diagrams of a media content generation interface provided by an embodiment of the present application;
Fig. 3 illustrates a second schematic diagram of a media content generation interface provided by an embodiment of the present application;
Fig. 4 illustrates a third schematic diagram of a media content generation interface provided by an embodiment of the present application;
Fig. 5 illustrates a fourth schematic view of a media content generation interface provided by an embodiment of the present application;
Fig. 6 illustrates a schematic diagram of an emoji generation interface provided by an embodiment of the present application;
Fig. 7 illustrates a block diagram illustrating a structure of an emoji image generating apparatus provided by an embodiment of the present application;
Fig. 8 illustrates a block diagram showing a structure of an electronic device provided by an embodiment of the present application;
Fig. 9 illustrates a schematic hardware structure of an electronic device provided by an embodiment of the present application.

### DETAILED DESCRIPTION

The technical solutions in the embodiments of the present application will be described below clearly with reference to the drawings in the embodiments of the present application, and it is obvious that the described embodiments are some, but not all, embodiments of the present application. All other embodiments, which can be derived from the embodiments given herein by a person skilled in the art, are within the scope of the present application.

The terms "first", "second" and the like in the description and in the claims, are used for distinguishing between similar elements and not necessarily for describing a particular sequential or chronological order. It is to be understood that the terms so used are interchangeable under appropriate circumstances such that embodiments of the present application may be practiced other than those illustrated or described herein, and the terms "first", "second" and the like are generally used herein in a generic sense and do not limit the number of objects, e.g., a first object can be one or more. In addition, "and/or" in the specification and claims means at least one of connected objects, a character "/", and generally means that the former and latter related objects are in an "or" relationship.

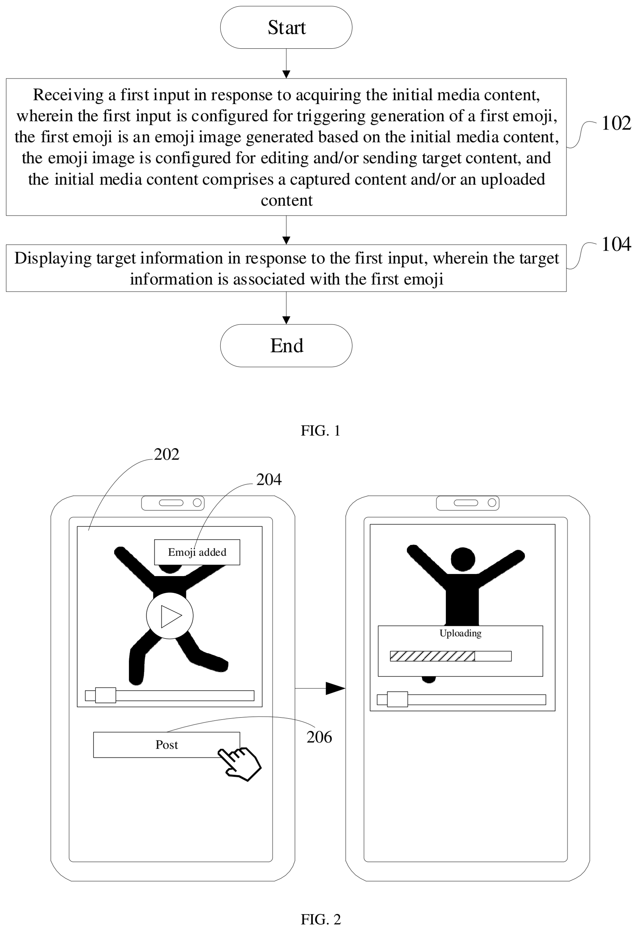

The emoji image generation method, the emoji image generation apparatus, the electronic device and the readable storage medium provided by the embodiments of the present application are described in detail with reference to Figs. 1 to 9.

The embodiments of the present application provides an emoji image generation method, Fig. 1 illustrates a schematic flow chart illustrating an emoji image generation method provided by an embodiment of the present application, and as shown in Fig. 1, the emoji image generation method includes, on a first user side:
Step 102, receiving a first input in response to acquiring the initial media content, the first input is configured for triggering generation of a first emoji, the first emoji is an emoji image generated based on the initial media content, the emoji image is configured for editing and/or sending target content, and the initial media content includes a captured content and/or an uploaded content.

In embodiments of the present application, the initial media content may include image or video content. The initial media content may be media content uploaded by the user from the first user side, or media content captured by the user from the first user side.

Illustratively, when a user uploads a video file on the platform, the video file uploaded by the user is determined as the initial media content, and after the video file is uploaded, the video content is determined as the acquired initial media content.

Illustratively, when a user captures image data through a capturing function of the platform, the captured image data is determined as the initial media content.

In the embodiment of the present application, the first input is configured for triggering generation of a first emoji, the first emoji is an emoji image generated based on the initial media content, the emoji image is configured for editing and/or sending target content, and the initial media content includes captured content and/or uploaded content.

In the embodiment of the present application, the target content includes communication message information when the user and other users carry out instant communication session, the target content also includes comment information posted by the user on the platform works, and the target content also includes text information and image information used in the user personal works.

For example, when the user chats with another user, the first emoji can be sent to the chat dialog box, or when the text message is edited, the first emoji can be inserted into the text message and sent to the chat conversation page.

Illustratively, when a user comments on a media work of the platform, the user can select to send a first emoji to a comment area.

Illustratively, when the user uploads the video or image work, the user can insert the first emoji into an image or text message of the video or image work.

In the embodiment of the present application, the first input may be: a click input of the user on a control in the interface where the initial media content is located, a voice instruction input by the user, or a specific gesture input by the user, which may be specifically determined based on the actual use requirement and is not limited in the embodiment of the present application.

The specific gesture in the embodiment of the present application can be any one of a single-click gesture, a sliding gesture, a dragging gesture, a pressure recognition gesture, a long-pressing gesture, an area change gesture, a double-press gesture and a double-click gesture; the click input in the embodiment of the present application can be single click input, double click input or click input of any number of times, and can also be long-pressing input or short-press input.

Step 104, displaying target information in response to the first input, and the target information is associated with the first emoji.

Illustratively, the target information includes emoji addition success prompt information for prompting that a corresponding first emoji has been generated based on the initial media content, and the first emoji has completed being stored.

Illustratively, the target information includes an emoji image, and after a first emoji is generated based on the initial media content, the emoji image corresponding to the first emoji is displayed, so that the user can preview the generated first emoji.

In the embodiment of the present application, after a user uploads the initial media content when the user posts works or chats with other users, or captures the initial media content, the first user side can automatically generate the corresponding first emoji based on the initial media content in response to the first input, and displays the target information to prompt the user. Therefore, the user can conveniently produce the corresponding emoji based on the image acquired in the process of posting the personal works or sending the instant communication messages, so that a convenient path for generating emoji is provided, and the step of producing the emoji by the user is simplified.

In some embodiments of the present application, the emoji image generation method further includes: after the target information is displayed, generating target media content on the basis of the initial media content in a media content generation interface; and posting the target media content in response to a determination operation on the target media content and/or sending the target media content to at least one second user.

In the embodiment of the present application, after the target information related to the first emoji is displayed, the user can continue to perform edit operation on the initial media content to generate the target media content, and after the user performs the determination operation on the target media content, the target media content is posted as a personal work or is sent to at least one second user.

The media content generation interface displays initial media content uploaded or captured by a user, the user can edit the initial media content in the media generation interface, and target media content completed based on the initial media content can be uploaded and posted in response to the determination operation or sent to other users.

Specifically, after adding the first emoji based on the initial media content, the user can perform edit operations such as adding a sticker, adjusting a filter or effect, cropping a size and the like on the initial media content on the media content generation interface, and take the edited initial media content as the target media content.

Fig. 2 illustrates a first schematic diagrams of a media content generation interface provided by an embodiment of the present application, and as shown in Fig. 2, after a user captures a video work 202, the video work 202 is displayed as a preview on the media content generation interface, and after a first emoji is produced based on a first input, emoji addition completion information 204 is displayed. The user edits the video work 202 to obtain an edited video work 202, and the user can upload and post the edited video work 202 as target media content by clicking the "post" button 206. The emoji addition completion information is the target information, the video work 202 is initial media content, the edited video work 202 is the target media content, and the user clicks the "post" button 206 to perform the determination operation on the target media content.

In the embodiment of the present application, in the process of posting works or sending session messages by a user, the capability of generating the first emoji based on the initial media content is provided, and after the first emoji is generated, the user can continue to edit the initial media content to obtain the target media content, and post the target content after the user performs the determination operation on the target media content, or send the target content to other users, so that the process of uploading or sending the corresponding target media content by the user is not interrupted in the emoji producing process.

In some embodiments of the present application, the receiving a first input in response to acquiring the initial media content includes: presenting the initial media content on the media content generation interface; and confirming to receive the first input in response to a trigger operation on the media content generation interface.

In the embodiment of the present application, the first input is the trigger operation of the user on the media content generation interface. The first input may be a trigger operation on an operation control in the media content generation interface, or may be a trigger operation on initial media content in the media content generation interface. After receiving the corresponding trigger operation, it is determined that the first input is received, and subsequent actions such as displaying the target information and the like can be continuously performed in response to the first input.

The initial media content uploaded or captured by a user is displayed in a media content generation interface, and the user can trigger the operation of generating the first emoji based on the initial media content by the first input on the media generation interface.

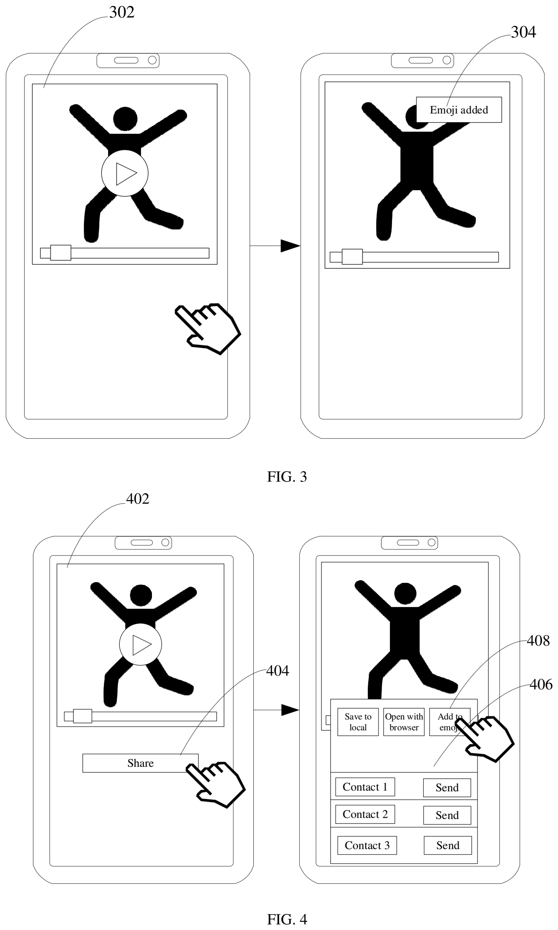

Fig. 3 illustrates a second schematic diagram of a media content generation interface provided by an embodiment of the present application, as shown in Fig. 3, after the user captures a video work 302, the video work 302 is displayed in the media content generation interface in a preview manner, the user triggers an action of generating a first emoji based on the video work 302 by long-pressing the video work 302 in the media content generation interface, and after the first emoji is generated, an emoji addition completion information 304 is displayed. The video work 302 is the initial media content, the operation input of the user by long pressing the media content generation interface is the first input, and the emoji addition completion information is the target information. In some other embodiments, the media content generation interface presents an emoji addition control, and the first input may also be a trigger operation on the emoji addition control.

In the embodiment of the present application, the initial media content can be displayed in the media content generation interface, and a user can perform the first input for triggering the generation of the first emoji based on the initial media content by the trigger operation on the media content generation interface, so that the user can generate the corresponding first emoji through convenient operation in response to displaying the initial media content, and the operation flow of the user for producing the emoji is further simplified.

In some embodiments of the present application, the first input includes a first sub-input and a second sub-input; the receiving a first input in response to acquiring the initial media content including: receiving the first sub-input to a first control in the media content generation interface in response to displaying the initial media content on the media content generation interface; displaying a second control in a content editing interface in response to the first sub-input; and receiving a second sub-input to the second control, and the second control includes an emoji addition control.

In the embodiment of the present application, the first sub-input and the second sub-input are both sub-inputs of the first input. The first control includes a content sharing button for sharing initial media content, and the second control includes an emoji addition control for adding the generated first emoji to the emoji favorite.

Fig. 4 illustrates a third schematic diagram of a media content generation interface provided by an embodiment of the present application, as shown in Fig. 4, after a user captures a video work 402, the video work 402 is displayed in the media content generation interface, and a content sharing button 404 is also displayed in the media generation interface. After the user clicks the content sharing button 404, the floating window 406 pops up in the media generation interface, and the emoji addition button 408 is displayed in the floating window 406. The user clicks the emoji addition button 408, which can trigger an action of generating a corresponding emoji image based on the video work 402 and adding the emoji image to the emoji favorite. The video work 402 is an initial media content, the content sharing button 404 is a first control, the emoji addition button 408 is a second control, the user clicks the content sharing button 404 to perform the first sub-input, and the user clicks the emoji addition button 408 to perform the second sub-input.

In some other embodiments, the triggering of the user on the first sub-input in the media content generation interface may also be a preset trigger operation on the media content generation interface, for example, a long-pressing operation on a screen area of the media generation interface, and after the long-pressing operation is performed, the second control appears.

In the embodiment of the present application, a user can conveniently generate the emoji image based on the initial media content by sequentially performing the first sub-input and the second sub-input on the first control and the second control in the media content generation interface, and add the emoji image to the emoji favorite, so that the convenience of the user in the operation of the media content generation interface is ensured.

In some embodiments of the present application, the first emoji includes any one of: a dynamic emoji image and a static emoji image.

In the embodiment of the present application, the first emoji may be a dynamic emoji image or a static emoji image.

In the embodiment of the present application, the first emoji can be stored as a dynamic emoji image in a GIF (Graphic Interchange Format) format, and the first emoji can be converted between the static emoji image and the dynamic emoji image, namely, a certain frame of image in the dynamic emoji image is clipped as the static emoji image. Illustratively, when the initial media content is a dynamic image or video, a button for switching the static emoji and the dynamic emoji is displayed on the user interface and/or the user is supported to select the image frame for generating the first emoji.

Illustratively, when the first emoji is a dynamic emoji image, and the user sends the first emoji to the dialog box, the first emoji is movable in the dialog box. When the first emoji is a static emoji image, the first emoji is kept fixed in the dialog box.

In the embodiment of the present application, the dynamic emoji image and the static emoji image can be generated through the acquired initial media content, so that the flexibility of the user for self-producing the emoji is improved, and the user can select to produce the dynamic emoji and the static emoji according to actual requirements.

In some embodiments of the present application, the initial media content includes a first video; before displaying the target information, the method includes generating the first emoji based on the first video, and the first emoji is a dynamic emoji image.

The initial media content in the embodiment of the present application includes a first video, and the first video can be an uploaded video or a captured video. When the first emoji is generated through the first video, the first video can be converted into a dynamic image, and the dynamic image is directly used as a dynamic emoji image corresponding to the first emoji. Illustratively, in the process of converting the first video into the dynamic emoji image, part of the video frames in the first video are deleted to reduce the data volume of the generated dynamic emoji image.

Illustratively, in the process of converting the first video into the dynamic emoji image, the interval duration between at least two video frames in the first video is adjusted to adjust the playing effect of the generated dynamic emoji image.

Illustratively, in the process of converting the first video into the dynamic emoji image, the playing sequence between at least two video frames in the first video is adjusted to adjust the display content in the generated dynamic emoji image.

In the embodiment of the present application, when the obtained initial media content is a video work, the corresponding dynamic emoji can be generated based on the video work, and the required operation flow of the user for producing the dynamic emoji is simplified.

In some embodiments of the present application, the initial media content includes a first video; before displaying the target information, the method includes generating the first emoji based on the first video, and the first emoji is a static emoji image.

In the embodiment of the present application, the target video frame in the first video is extracted and is used as the static emoji image to generate the first emoji, so that the first emoji generated based on the first video can be a dynamic emoji or a static emoji, a user can flexibly select to produce the dynamic emoji or the static emoji based on the first video, the production of the emoji by the user is simplified, and meanwhile, the flexibility of the user in selecting and producing the emoji can be improved.

Illustratively, a target video frame in the first video is automatically extracted, and the target video frame is a first frame video frame, a last frame video frame or a middle video frame in the first video frame.

In some embodiments of the present application, generating the first emoji based on the first video includes: in response to that a video length of the first video is smaller than or equal to a preset length, determining a first dynamic image as the first emoji, and the first dynamic image is a dynamic image obtained by converting the first video.

In the embodiment of the present application, the video length of the first video is compared with the preset length, when the video length of the first video is smaller than or equal to the preset length, the first video is directly converted into the first dynamic image based on the complete first video, and the first dynamic image is determined as the first emoji.

The preset length is 5 seconds to 10 seconds.

Illustratively, the preset length is 10 seconds, and it is recognized that the video length of the first video is 8 seconds, the first video is directly converted in format into a GIF image, and the GIF image is stored as a first emoji in an emoji favorite. It can be understood that the emoji favorites can be the area for storing the emojis, which matches the account of the user. For example, the emoji favorites can be the emoji panel.

In the embodiment of the present application, the video length of the first video is compared with the preset length, and the first video with the video length not exceeding the preset length is automatically converted in format to obtain the first emoji, so that the obtained first emoji has less data volume, the corresponding emoji can be produced without manually performing operation by the user such as cropping the obtained video and the like, and the operation steps of the user in producing the emoji are further simplified.

In some embodiments of the present application, generating the first emoji based on the first video includes: in response to that a video length of the first video is greater than a preset length, determining a second video in the first video, and a video length of the second video is less than or equal to the preset length; and determining a second dynamic image as the first emoji, and the second dynamic image is obtained by converting the second video.

In the embodiment of the present application, the second video is a partial video of the first video, the first video includes all video contents in the second video, and the video length of the first video is greater than that of the second video. In the embodiment of the present application, the video length of the first video is compared with the preset length, when the video length of the first video is greater than the preset length, the first video is cropped into the second video with the video length less than or equal to the preset length, the second video is converted into the second dynamic image, and the second dynamic image is determined to be the first emoji.

In some possible embodiments, the first video can be automatically cropped according to a preset length.

Illustratively, a target video frame segment with a video length of a preset time length in the first video is automatically clipped, and the target video frame segment is taken as the second video. The selected position of the target video frame segment can be set by a user in advance, and includes: a front segment of the first video, a back segment of the first video, or a middle segment of the first video.

In the embodiment of the present application, the video length of the first video is compared with the preset length, and when the length of the first video exceeds the preset length, the second video in the first video is clipped. The first emoji is determined based on the second dynamic image obtained by converting the second video, and even if the video length of the first video is too long, the data volume of the obtained first emoji can still be ensured to be small.

In some embodiments of the present application, the determining a second video in the first video includes: displaying the initial media content and a third control; receiving a second input to the third control, the third control including a video cropping control; and in response to the second input, clipping the second video in the first video.

In the embodiment of the present application, the third control element is configured to crop the first video in the initial media content, and the second input is configured to trigger a cropping action on the first video. The user can select a target frame segment in the first video by performing a second input to the third control element, and clip the second video in the first video based on the selected target frame segment.

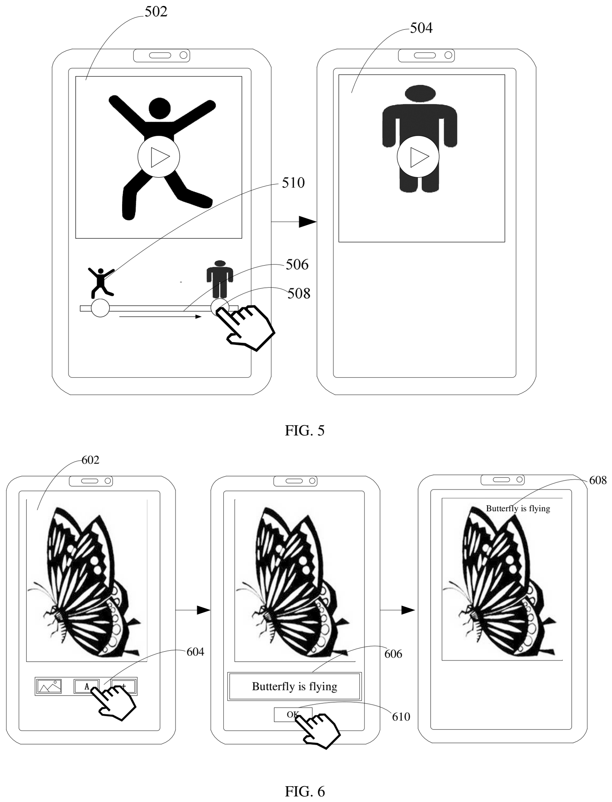

Fig. 5 illustrates a fourth schematic view of a media content generation interface provided by an embodiment of the present application, as shown in Fig. 5, a first video 502 and a video cropping control 506 are displayed on the media content generation interface. The user clips the second video 504 from the first video 502 by dragging the floating icon 508 in the video cropping control 506. A preview image 510 in the video is displayed at a position associated with the video cropping control 506, and the user determines a video clip to be cropped by viewing the preview image 510 at the corresponding position while dragging the floating icon 508 (e.g., the current preview image is displayed above the floating icon 508 in Fig. 5). The video cropping control is a third control and the user dragging a floating icon in the video cropping control is a second input.

In the embodiment of the present application, a user can manually crop the first video by operating the third control to obtain the second video, so that the content of the first emoji generated based on the second video is manually selected by the user, and the obtained first emoji is ensured to meet the actual requirement of the user.

In some embodiments of the present application, the emoji image generation method further includes: generating a first emoji based on the initial media content.

In an embodiment of the present application, before displaying the target information, the first emoji is generated based on the initial media content displayed in the media content generation interface. The initial media content may be video content, image content, or text content, and the initial media content is media content uploaded or captured by a user, and the specific type is not specifically limited herein.

Illustratively, when the initial media content is video content, a static first emoji can be generated by clipping a video frame from the video content, and a part of the video content in the video content can be converted into a dynamic image to obtain a dynamic first emoji.

Illustratively, when the initial media content is image content, the image content can be directly used as the first emoji. If the image content is a static image, the first emoji is a static emoji, and if the image content is a dynamic image, the first emoji is a dynamic image. When the number of the image contents is multiple, the plurality of image contents can be selected to be combined to obtain the dynamic first emoji.

Illustratively, when the initial media content is text content, a text image can be generated based on the text content, and the text image is taken as the first emoji.

In the embodiment of the present application, the first emojis are generated based on the initial media content, so that different types of initial media content can generate corresponding first emojis, and a user can flexibly select the types of uploaded or captured initial media content to produce different types of first emojis.

In some embodiments of the present application, generating the first emoji based on the initial media content includes: displaying the target information and a fourth control, and the target information includes an emoji image generated based on the initial media content; receiving a third input to the fourth control, and the third input is configured for editing the emoji image; and generating the first emoji based on the edited emoji image.

In the embodiment of the present application, the fourth control is a control for editing the generated emoji image, and the user can perform edit operations such as inserting a sticker or inserting a text into the emoji image by performing a third input on the fourth control.

In the embodiment of the present application, in the process of generating the first emoji based on the initial media content, the emoji image generated based on the initial content is displayed, and the fourth control for editing the emoji image is displayed. The user can edit the emoji image through the displayed fourth control, the edited emoji image is determined to be a first emoji, and then the first emoji is added to the emoji favorite.

Illustratively, editing the emoji image includes at least one of: inserting texts into the emoji image, inserting a sticker into the emoji image, adjusting the color parameter of the emoji image, adjusting the size parameter of the emoji image, or adjusting the playing speed of the emoji image.

It can be understood that, after receiving the first input, it may jump to the emoji generation interface to display the target information, the target information may include the initial media content or the intermediate media content that has been edited in the media content generation interface, and the first emoji is generated through the editing operation of the user on the emoji generation interface. After the first emoji is generated, it may return to the media content generation interface, and the initial media content or the media content before entering the emoji generation interface is continuously edited so as to generate the target media content.

Fig. 6 illustrates a schematic diagram of an emoji generation interface provided by an embodiment of the present application, as shown in Fig. 6, an emoji image 602 and an image editing control 604 are displayed on the emoji generation interface, and after the user clicks a text insertion option in the image editing control 604, a text input box 606 is displayed. The user enters the text contents 608 in the text input box 606, and after clicking the "ok" button 610, the user completes editing the texts inserted into the emoji image. The user clicks the text insertion option in the image editing control 604 and enters text in the text entry box 606 as the third input and the image editing control 604 is the fourth control.

In the embodiment of the present application, before the emoji image generated based on the initial media content is stored as the first emoji, the user can edit the emoji image through the fourth control, and the edited emoji image is used as the first emoji, so that the user can edit the emoji image generated based on the initial media content for the second time, and the flexibility of producing the emoji is further improved.

In some embodiments of the present application, the initial media content includes at least one preset image; before displaying the target information, the method includes: determining at least one preset image as the first emoji, and a number of the first emojis is matched with a number of the preset images.

In the embodiment of the present application, the preset image can be an image uploaded or captured by a user. When the initial media content is a preset image, the preset image is directly stored in the emoji favorite as a first emoji.

Illustratively, when the number of the preset images is multiple, each preset image is respectively used as the first emoji, and then plurality of first emojis are stored in the emoji favorite, the number of the first emojis is the same as that of the preset images, and the first emojis one-to-one correspond with the preset images.

For example, the preset image may be a static image, and the first emoji corresponding to the preset image is a static emoji. The preset image may also be a dynamic image, and the first emoji corresponding to the preset image is a dynamic emoji. For example, if the dynamic image is Live Photo, the dynamic image is converted into a GIF image as the first emoji.

In the embodiment of the present application, when the initial media content is a plurality of preset images, each preset image is taken as a corresponding first emoji, and when the initial media content is a plurality of preset images, a plurality of first emojis can be added to the emoji favorite at one time, so that the effect of batch production of the emojis is realized.

In some embodiments of the present application, the number of preset images is at least two; and determining at least one preset image as a first emoji includes: determining the target image as the first emoji in response to a selection operation on the target image in at least two preset images, and the target image is at least one preset image in the at least two preset images.

In the embodiment of the present application, in response to that the initial media content is a plurality of preset images, a user can select the preset images through a selection operation, and the selected target image is determined as the first emoji. The user can select one or more target images from a plurality of preset images.

Illustratively, a plurality of preset images are displayed on the media content generation interface, a user clicks a target image in the plurality of preset images, the clicked preset image is determined as the target image, and a check identifier is displayed on the target image. The clicking input of clicking the target image by the user is the selection operation.

In the embodiment of the present application, when the initial media content includes at least two preset images, the at least two preset images are displayed, and by selecting the target image through selection operation by the user, the user can select to generate a corresponding first emoji based on a part of content in the initial media content.

In some embodiments of the present application, the initial media content includes at least two preset images; before displaying the target information, the method includes: combining the at least two preset images into the first emoji, and the first emoji is a dynamic emoji image.

In the embodiment of the present application, in response to that the initial media content is at least two preset images, the at least two preset images can be combined, and the combined image is used as the first emoji. The emoji image obtained by combining at least two preset images is a dynamic emoji image.

Illustratively, the at least two preset images are combined according to the arrangement sequence of the at least two preset images to generate a dynamic emoji image, so that the display sequence of the at least two preset images in the dynamic emoji image matches with the arrangement sequence.

In the embodiment of the present application, the user can set the display duration of each preset image in the dynamic emoji images obtained by combination. For example, the preset image includes a first image and a second image, the display duration of the first image in the dynamic emoji image is 1 second, and the display duration of the second image is 3 seconds.

In the embodiment of the present application, in response to that the initial media content is at least two preset images, the at least two preset images can be combined into the dynamic emoji image, the combined dynamic emoji image is used as the first emoji, and the combined dynamic emoji image can be quickly generated without combining the plurality of preset images in other applications by the user.

In some embodiments of the present application, the initial media content includes at least two preset images; before displaying the target information, the method includes combining the at least two preset images into the first emoji, and the first emoji is a static emoji image.

In the embodiment of the present application, in response to that the initial media content is at least two preset images, the at least two preset images can be combined in a tiled mode. Illustratively, the area ratio of each preset image in the combined static emoji image can be freely set by the user.

In some embodiments of the present application, the preset image includes any one of: a static preset image or a dynamic preset image. In some embodiments, the dynamic preset image may include a dynamic image or a video.

In the embodiment of the present application, when the initial media content is the static preset image or the dynamic preset image, the first emoji can be generated based on the preset image, so that the flexibility of the user in producing the emoji is improved.

Illustratively, by combining a plurality of preset static images, a dynamic first emoji can be obtained.

Illustratively, by clipping an image frame from a dynamic preset image, a static first emoji can be obtained.

In sone embodiments of the present application, after displaying the target information in response to the first input, the method include: storing the first emoji in a local storage area; and/or adding the first emoji to an emoji panel, and the emoji panel is configured for generating the target content.

In the embodiment of the present application, after the first emoji is generated based on the initial media content, the first emoji can be stored, and the storage position can be a local storage area and can also be uploaded to a server, so that the server binds the first emoji to the account of the user, and the first emoji is added to an emoji panel corresponding to the account.

Specifically, the user can set the storage position of the first emoji in advance, so that the first emoji is selected to be stored locally and/or uploaded to a server for storage.

In the embodiment of the present application, the generated first emoji is stored in the local storage area and/or added to the emoji panel, so that the convenience of using the first emoji by the user can be improved.

In some embodiments of the present application, the target content includes the emoji image, and the method further includes: generating the target content based on the first emoji in the emoji panel; and sending the target content to at least one second user and/or posting the target content in response to a determination operation on the target media content.

In the embodiment of the present application, when the user edits the target content, the user can edit the target content with the first emoji, post the target content and/or sent the target content to at least one second user.

Illustratively, the target content includes social chat information that the user needs to send to the second user.

Illustratively, the target content includes a video work uploaded by a user publication.

Illustratively, the target content includes comment information of the user under the video works posted by other users.

In the emoji image generation method provided by the embodiment of the present application, the execution subject can be an emoji image generation apparatus. The embodiment of the present application takes an emoji image generation apparatus to execute the emoji image generation method as an example, and describes the emoji image generation apparatus provided in the embodiment of the present application.

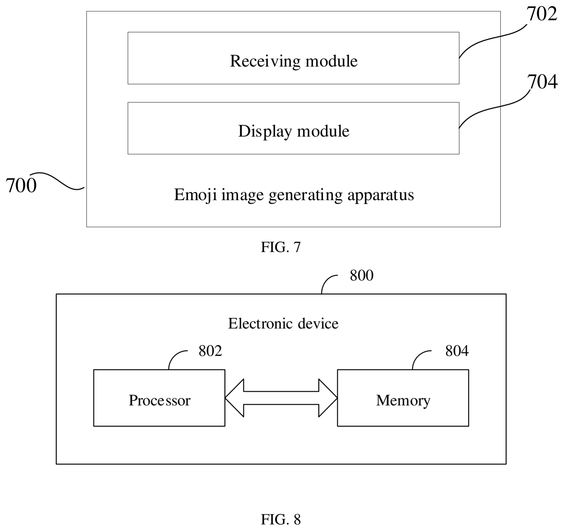

In some embodiments of the present application, an emoji image generating apparatus is provided, and Fig. 7 illustrates a block diagram illustrating a structure of an emoji image generating apparatus provided by an embodiment of the present application, as shown in Fig. 7, an emoji image generating apparatus 700, and on a first user side, the emoji image generating apparatus 700 includes:
a receiving module 702 configured for receiving a first input in response to acquiring the initial media content, the first input is configured for triggering generation of a first emoji, the first emoji is an emoji image generated based on the initial media content, the emoji image is configured for editing and/or sending target content, and the initial media content includes a captured content and/or an uploaded content; and
a display module 704 configured for displaying target information in response to the first input, and the target information is associated with the first emoji.

In the embodiment of the present application, after a user uploads the initial media content when the user posts works or chats with other users, or captures the initial media content, the first user side can automatically generate the corresponding first emoji based on the initial media content in response to the first input, and displays the target information to prompt the user. Therefore, the user can conveniently produce the corresponding emoji based on the image acquired in the process of posting the personal works or sending the instant communication messages, so that a convenient path for generating emoji is provided, and the step of producing the emoji by the user is simplified.

In some embodiments of the present application, the display module 704 is configured for, after displaying the target information, generating target media content on the basis of the initial media content in a media content generation interface; and
the emoji image generating apparatus 700 includes:
a posting module configured for posting the target media content in response to a determination operation on the target media content; and/or
a transmission module configured for sending the target media content to at least one second user.

In the embodiment of the present application, in the process of posting works or sending session messages by a user, the capability of generating the first emoji based on the initial media content is provided, and after the first emoji is generated, the user can continue to edit the initial media content to obtain the target media content, and post the target content after the user performs the determination operation on the target media content, or send the target content to other users, so that the process of uploading or sending the corresponding target media content by the user is not interrupted in the emoji producing process.

In some embodiments of the present application, the display module 704 is configured for presenting the initial media content on the media content generation interface; and
the emoji image generating apparatus 700 includes:
a confirmation module configured for confirming to receive the first input in response to a trigger operation on the media content generation interface.

In the embodiment of the present application, the initial media content can be displayed in the media content generation interface, and a user can perform the first input for triggering the generation of the first emoji based on the initial media content by the trigger operation on the media content generation interface, so that the user can generate the corresponding first emoji through convenient operation in response to displaying the initial media content, and the operation flow of the user for producing the emoji is further simplified.

In some embodiments of the present application, the first input includes a first sub-input and a second sub-input; and
the receiving module 702 is configured for receiving the first sub-input to a first control in the media content generation interface in response to displaying the initial media content on the media content generation interface;
the display module 704 is configured for displaying a second control in a content editing interface in response to the first sub-input; and
the receiving module 702 is configured for receiving a second sub-input to the second control, and the second control includes an emoji addition control.

In the embodiment of the present application, a user can conveniently generate the emoji image based on the initial media content by sequentially performing the first sub-input and the second sub-input on the first control and the second control in the media content generation interface, and add the emoji image to the emoji favorite, so that the convenience of the user in the operation of the media content generation interface is ensured.

In some embodiments of the present application, the first emoji includes any one of: a dynamic emoji image or a static emoji image.

In the embodiment of the present application, the dynamic emoji image and the static emoji image can be generated through the acquired initial media content, so that the flexibility of the user for self-producing the emoji is improved, and the user can select to produce the dynamic emoji and the static emoji according to actual requirements.

In some embodiments of the present application, the initial media content includes: a first video; and
the emoji image generating apparatus 700 includes:
a generation module configured for generating the first emoji based on the first video, and the first emoji is a dynamic emoji image.

In the embodiment of the present application, when the obtained initial media content is a video work, the corresponding dynamic emoji can be generated based on the video work, and the required operation flow of the user for producing the dynamic emoji is simplified.

In some embodiments of the present application, the initial media content includes: a first video; and
the generation module is configured for generating the first emoji based on the first video, and the first emoji is a static emoji image.

In the embodiment of the present application, the target video frame in the first video is extracted and is used as the static emoji image to generate the first emoji, so that the first emoji generated based on the first video can be a dynamic emoji or a static emoji, a user can flexibly select to produce the dynamic emoji or the static emoji based on the first video, the production of the emoji by the user is simplified, and meanwhile, the flexibility of the user in selecting and producing the emoji can be improved.

In some embodiments of the present application, the determination module is configured for, in response to that a video length of the first video is smaller than or equal to a preset length, determining a first dynamic image as the first emoji, and the first dynamic image is a dynamic image obtained by converting the first video.

In the embodiment of the present application, the video length of the first video is compared with the preset length, and the first video with the video length not exceeding the preset length is automatically converted in format to obtain the first emoji, so that the obtained first emoji has less data volume, the corresponding emoji can be produced without manually performing operation by the user such as cropping the obtained video and the like, and the operation steps of the user in producing the emoji are further simplified.

In some embodiments of the present application, the determination module is configured for, in response to that a video length of the first video is greater than a preset length, determining a second video in the first video, and a video length of the second video is less than or equal to the preset length; and
the determination module is configured for determining a second dynamic image as the first emoji, and the second dynamic image is obtained by converting the second video.

In the embodiment of the present application, the video length of the first video is compared with the preset length, and when the length of the first video exceeds the preset length, the second video in the first video is clipped. The first emoji is determined based on the second dynamic image obtained by converting the second video, and even if the video length of the first video is too long, the data volume of the obtained first emoji can still be ensured to be small.

In some embodiments of the present application, the display module 704 is configured for displaying the initial media content and a third control; and
the receiving module is configured for receiving a second input to the third control, the third control including a video cropping control; and
the emoji image generating apparatus 700 includes:
   a clipping module configured for, in response to the second input, clipping the second video in the first video.

In the embodiment of the present application, a user can manually crop the first video by operating the third control to obtain the second video, so that the content of the first emoji generated based on the second video is manually selected by the user, and the obtained first emoji is ensured to meet the actual requirement of the user.

In some embodiments of the present application, the generation module is configured for generating the first emoji based on the initial media content.

In the embodiment of the present application, the first emojis are generated based on the initial media content, so that different types of initial media content can generate corresponding first emojis, and a user can flexibly select the types of uploaded or captured initial media content to produce different types of first emojis.

In some embodiments of the present application, the display module 704 is configured for displaying the target information and a fourth control, and the target information includes an emoji image generated based on the initial media content;
the receiving module 702 is configured for receiving a third input to the fourth control, and the third input is configured for editing the emoji image; and
the generation module is configured for generating the first emoji based on the edited emoji image.

In the embodiment of the present application, before the emoji image generated based on the initial media content is stored as the first emoji, the user can edit the emoji image through the fourth control, and the edited emoji image is used as the first emoji, so that the user can edit the emoji image generated based on the initial media content for the second time, and the flexibility of producing the emoji is further improved.

In some embodiments of the present application, the determination module is configured for determining at least one preset image as the first emoji, and a number of the first emojis is matched with a number of the preset images.

In the embodiment of the present application, when the initial media content is a plurality of preset images, each preset image is taken as a corresponding first emoji, and when the initial media content is a plurality of preset images, a plurality of first emojis can be added to the emoji favorite at one time, so that the effect of batch production of the emojis is realized.

In some embodiments of the present application, the number of the preset images is at least two;
the determination module is configured for determining the target image as the first emoji in response to a selection operation on the target image in at least two preset images, and the target image is at least one preset image in the at least two preset images.

In the embodiment of the present application, when the initial media content includes at least two preset images, the at least two preset images are displayed, and by selecting the target image through selection operation by the user, the user can select to generate a corresponding first emoji based on a part of content in the initial media content.

In some embodiments of the present application, the initial media content includes at least two preset images; and
the emoji image generating apparatus 700 includes:
a combination module configured for combining the at least two preset images into the first emoji, and the first emoji is a dynamic emoji image.

In the embodiment of the present application, in response to that the initial media content is at least two preset images, the at least two preset images can be combined into the dynamic emoji image, the combined dynamic emoji image is used as the first emoji, and the combined dynamic emoji image can be quickly generated without combining the plurality of preset images in other applications by the user.

In some embodiments of the present application, the initial media content includes at least two preset images; and
the combination module is configured for combining the at least two preset images into the first emoji, and the first emoji is a static emoji image.

In the embodiment of the present application, in response to that the initial media content is at least two preset images, the at least two preset images can be combined in a tiled mode. Illustratively, the area ratio of each preset image in the combined static emoji image can be freely set by the user.

In some embodiments of the present application, the preset image includes any one of: a static preset image and a dynamic preset image.

In the embodiment of the present application, when the initial media content is the static preset image or the dynamic preset image, the first emoji can be generated based on the preset image, so that the flexibility of the user in producing the emoji is improved.

In the embodiment of the present application, the generated first emoji is stored in the local storage area and/or added to the emoji panel, so that the convenience of using the first emoji by the user can be improved.

In some embodiments of the present application, the generation module is configured for generating the target content based on the first emoji in the emoji panel; and
the transmission module is configured for sending the target content to at least one second user and/or posting the target content in response to a determination operation on the target media content.

In the embodiment of the present application, when the user edits the target content, the user can edit the target content with the first emoji, post the target content and/or sent the target content to at least one second user.

The emoji image generation apparatus in the embodiment of the application can be an electronic device or a component in the electronic device, such as an integrated circuit or a chip. The electronic device can be a terminal or other devices other than the terminal. Illustratively, the electronic device can be a mobile phone, a tablet computer, a notebook computer, a pocket PC, a vehicle-mounted electronic device, a Mobile Internet Device (MID), augmented reality (AR)/ virtual reality (VR) devices, robots, wearable devices, ultra-mobile personal computer (UMPC), netbooks or personal digital assistant (PDA) and so forth, or servers, Network Attached Storage (NAS), personal computer (PC), television (TV), teller machine or self-service machine and so forth, and the embodiment of the present application is not specifically limited.

The emoji image generation apparatus in the embodiment of the application can be an apparatus with an operating system. The operating system may be an Android operating system, an iOS operating system, or other possible operating systems, and the embodiment of this application is not specifically limited.

The emoji image generation apparatus provided by the embodiments of the application can realize each process realized by the embodiment of the above method, and in order to avoid repetition, they will not be repeated here.

Optionally, the embodiment of the application also provides an electronic device, and Fig. 8 illustrates a block diagram showing a structure of an electronic device provided by an embodiment of the present application. As shown in Fig. 8, the electronic device 800 includes a processor 802 and a memory 804, and the memory 804 stores programs or instructions that can be executed on the processor 802. When the programs or instructions are executed by the processor 802, the steps of the above method embodiment can be realized and the same technical effects can be achieved, so to avoid repetition, they will not be described here.

It should be noted that the electronic devices in the embodiment of the present application include the above-mentioned mobile electronic devices and non-mobile electronic devices.

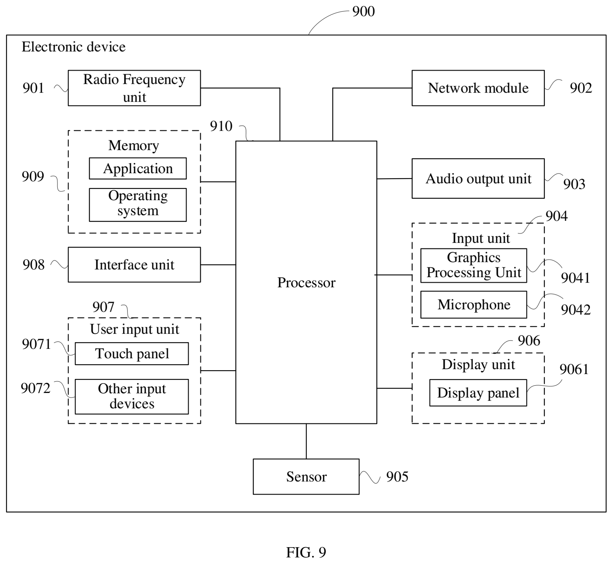

Fig. 9 illustrates a schematic hardware structure of an electronic device provided by an embodiment of the present application.

The electronic device 900 includes, but is not limited to, a radio frequency unit 901, a network module 902, an audio output unit 903, an input unit 904, a sensor 905, a display unit 906, a user input unit 907, an interface unit 908, a memory 909, and a processor 910 and so on.

It can be understood by those skilled in the art that the electronic device 900 can also include a power supply (such as a battery) for supplying power to various components, and the power supply can be logically connected with the processor 910 through a power management system, so that the functions of charging management, discharging management and power consumption management can be realized through the power management system. The structure of the electronic device shown in Fig. 9 does not constitute a limitation to the electronic device, and the electronic device may include more or less components than shown, or combine some components, or arrange different components, which will not be described here again.

The processor 910 is configured for receiving a first input in response to acquiring the initial media content, the first input is configured for triggering generation of a first emoji, the first emoji is an emoji image generated based on the initial media content, the emoji image is configured for editing and/or sending target content, and the initial media content includes a captured content and/or an uploaded content; and
the display unit 906 is configured for displaying target information in response to the first input, and the target information is associated with the first emoji.

In the embodiment of the present application, after a user uploads the initial media content or captures the initial media content, the first user side can automatically generate the corresponding first emoji based on the initial media content in response to the first input, and displays the target information to prompt the user. The user can conveniently produce the corresponding emoji based on the posted personal works, so that the step of producing the emoji by the user is simplified, the revisiting rate of personal works by the user is improved, and the pool of emojis supplied to the user is expanded.

In some embodiments of the present application, the processor 910 is configured for, after displaying the target information, generating target media content on the basis of the initial media content in a media content generation interface; and
the processor 910 is configured for posting the target media content in response to a determination operation on the target media content; and/or
the processor 910 is configured for sending the target media content to at least one second user.

In the embodiment of the present application, after generating the first emoji based on the initial media content, the user can continue to edit the initial media content to obtain the target media content, and post the target content after the user performs the determination operation on the target media content, or send the target content to other users, so that the process of uploading or sending the corresponding target media content by the user is not interrupted in the emoji producing process.

In some embodiments of the present application, the display unit 906 is configured for presenting the initial media content on the media content generation interface; and
the processor 910 is configured for confirming to receive the first input in response to a trigger operation on the media content generation interface.

In the embodiment of the present application, the initial media content can be displayed in the media content generation interface, and a user can perform the first input for triggering the generation of the first emoji based on the initial media content by the trigger operation on the media content generation interface, so that the user can generate the corresponding first emoji through convenient operation in response to displaying the initial media content, and the operation flow of the user for producing the emoji is further simplified.

In some embodiments of the present application, the first input includes a first sub-input and a second sub-input; and
the processor 910 is configured for receiving the first sub-input to a first control in the media content generation interface in response to displaying the initial media content on the media content generation interface;
the display unit 906 is configured for displaying a second control in a content editing interface in response to the first sub-input; and
the processor 910 is configured for receiving a second sub-input to the second control, and the second control includes an emoji addition control.

In the embodiment of the present application, a user can conveniently generate the emoji image based on the initial media content by sequentially performing the first sub-input and the second sub-input on the first control and the second control in the media content generation interface, and add the emoji image to the emoji favorite, so that the convenience of the user in the operation of the media content generation interface is ensured.

In some embodiments of the present application, the first emoji includes any one of: a dynamic emoji image or a static emoji image.

In the embodiment of the present application, the dynamic emoji image and the static emoji image can be generated through the acquired initial media content, so that the flexibility of the user for self-producing the emoji is improved, and the user can select to produce the dynamic emoji and the static emoji according to actual requirements.

In some embodiments of the present application, the initial media content includes: a first video; and
the processor 910 is configured for generating the first emoji based on the first video, and the first emoji is a dynamic emoji image.

In the embodiment of the present application, when the obtained initial media content is a video work, the corresponding dynamic emoji can be generated based on the video work, and the required operation flow of the user for producing the dynamic emoji is simplified.

In some embodiments of the present application, the initial media content includes: a first video; and
the processor 910 is configured for generating the first emoji based on the first video, and the first emoji is a static emoji image.

In the embodiment of the present application, the target video frame in the first video is extracted and is used as the static emoji image to generate the first emoji, so that the first emoji generated based on the first video can be a dynamic emoji or a static emoji, a user can flexibly select to produce the dynamic emoji or the static emoji based on the first video, the production of the emoji by the user is simplified, and meanwhile, the flexibility of the user in selecting and producing the emoji can be improved.

In some embodiments of the present application, the processor 910 is configured for, in response to that a video length of the first video is smaller than or equal to a preset length, determining a first dynamic image as the first emoji, and the first dynamic image is a dynamic image obtained by converting the first video.

In the embodiment of the present application, the video length of the first video is compared with the preset length, and the first video with the video length not exceeding the preset length is automatically converted in format to obtain the first emoji, so that the obtained first emoji has less data volume, the corresponding emoji can be produced without manually performing operation by the user such as cropping the obtained video and the like, and the operation steps of the user in producing the emoji are further simplified.

In some embodiments of the present application, the processor 910 is configured for, in response to that a video length of the first video is greater than a preset length, determining a second video in the first video, and a video length of the second video is less than or equal to the preset length; and
the processor 910 is configured for determining a second dynamic image as the first emoji, and the second dynamic image is obtained by converting the second video.

In the embodiment of the present application, the video length of the first video is compared with the preset length, and when the length of the first video exceeds the preset length, the second video in the first video is clipped. The first emoji is determined based on the second dynamic image obtained by converting the second video, and even if the video length of the first video is too long, the data volume of the obtained first emoji can still be ensured to be small.

In some embodiments of the present application, the display unit 906 is configured for displaying the initial media content and a third control; and
the processor 910 is configured for receiving a second input to the third control, the third control including a video cropping control; and
the processor 910 is configured for, in response to the second input, clipping the second video in the first video.

In the embodiment of the present application, a user can manually crop the first video by operating the third control to obtain the second video, so that the content of the first emoji generated based on the second video is manually selected by the user, and the obtained first emoji is ensured to meet the actual requirement of the user.

In some embodiments of the present application, the processor 910 is configured for generating the first emoji based on the initial media content.

In the embodiment of the present application, the first emojis are generated based on the initial media content, so that different types of initial media content can generate corresponding first emojis, and a user can flexibly select the types of uploaded or captured initial media content to produce different types of first emojis.

In some embodiments of the present application, the display unit 906 is configured for displaying the target information and a fourth control, and the target information includes an emoji image generated based on the initial media content;
the processor 910 is configured for receiving a third input to the fourth control, and the third input is configured for editing the emoji image; and
the processor 910 is configured for generating the first emoji based on the edited emoji image.

In the embodiment of the present application, before the emoji image generated based on the initial media content is stored as the first emoji, the user can edit the emoji image through the fourth control, and the edited emoji image is used as the first emoji, so that the user can edit the emoji image generated based on the initial media content for the second time, and the flexibility of producing the emoji is further improved.

In some embodiments of the present application, the processor 910 is configured for determining at least one preset image as the first emoji, and a number of the first emojis is matched with a number of the preset images.

In the embodiment of the present application, when the initial media content is a plurality of preset images, each preset image is taken as a corresponding first emoji, and when the initial media content is a plurality of preset images, a plurality of first emojis can be added to the emoji favorite at one time, so that the effect of batch production of the emojis is realized.

In some embodiments of the present application, the number of the preset images is at least two;
the processor 910 is configured for determining the target image as the first emoji in response to a selection operation on the target image in at least two preset images, and the target image is at least one preset image in the at least two preset images.

In the embodiment of the present application, when the initial media content includes at least two preset images, the at least two preset images are displayed, and by selecting the target image through selection operation by the user, the user can select to generate a corresponding first emoji based on a part of content in the initial media content.

In some embodiments of the present application, the initial media content includes at least two preset images; and
the processor 910 is configured for combining the at least two preset images into the first emoji, and the first emoji is a dynamic emoji image.

In the embodiment of the present application, in response to that the initial media content is at least two preset images, the at least two preset images can be combined into the dynamic emoji image, the combined dynamic emoji image is used as the first emoji, and the combined dynamic emoji image can be quickly generated without combining the plurality of preset images in other applications by the user.

In some embodiments of the present application, the initial media content includes at least two preset images; and
the processor 910 is configured for combining the at least two preset images into the first emoji, and the first emoji is a static emoji image.

In the embodiment of the present application, in response to that the initial media content is at least two preset images, the at least two preset images can be combined in a tiled mode. Illustratively, the area ratio of each preset image in the combined static emoji image can be freely set by the user.

In some embodiments of the present application, the preset image includes any one of: a static preset image and a dynamic preset image.

In the embodiment of the present application, when the initial media content is the static preset image or the dynamic preset image, the first emoji can be generated based on the preset image, so that the flexibility of the user in producing the emoji is improved.

In the embodiment of the present application, the generated first emoji is stored in the local storage area and/or added to the emoji panel, so that the convenience of using the first emoji by the user can be improved.

In some embodiments of the present application, the processor 910 is configured for generating the target content based on the first emoji in the emoji panel; and
the processor 910 is configured for sending the target content to at least one second user and/or posting the target content in response to a determination operation on the target media content.

In the embodiment of the present application, when the user edits the target content, the user can edit the target content with the first emoji, post the target content and/or sent the target content to at least one second user.

It should be understood that in the embodiment of the present application, the input unit 904 may include a Graphics Processing Unit (GPU) 9041 and a microphone 9042, and the graphics processor 9041 processes image data of still pictures or videos obtained by an image capture device (such as a camera) in a video capture mode or an image capture mode. The display unit 906 may include a display panel 9061, which may be configured in the form of a liquid crystal display, an organic light emitting diode, or the like. The user input unit 907 includes at least one of a touch panel 9071 and other input devices 9072. Touch panel 9071 is also called touch screen. The touch panel 9071 may include a touch detection device and a touch controller. Other input devices 9072 may include, but are not limited to, a physical keyboard, function keys (such as volume control buttons, switch buttons, etc.), a trackball, a mouse, and a joystick, which are not described in detail here.

The memory 909 can be used to store software programs and various data. The memory 909 may mainly include a first storage area for storing programs or instructions and a second storage area for storing data, and the first storage area may store an operating system, application programs or instructions required by at least one function (such as sound playing function, image playing function, etc.) and the like. Further, the memory 909 may include a transitory memory or a non-transitory memory, or the memory 909 may include both transitory and non-transitory memories. Among them, the non-transitory memory can be read-only memory (ROM), programmable read-only memory (PROM), erasable programmable read-only memory (EPROM), electrically erasable programmable read-only memory (EEPROM) or flash memory. The transitory memory can be Random Access Memory (RAM), static random access memory (SRAM), dynamic random access memory (DRAM), synchronous dynamic random access memory (Synchronous DRAM, SDRAM), double data rate synchronous dynamic random access memory (DDRSDRAM), enhanced synchronous dynamic random access memory (ESDRAM), synchronous link dynamic random access memory (SLDRAM) and direct memory bus random access memory (DRRAM). Memory 909 in embodiments of the present application includes, but is not limited to, these and any other suitable types of memory.

The processor 910 may include one or more processing units; optionally, the processor 910 integrates an application processor and a modem processor, and the application processor mainly handles operations related to the operating system, user interface and application programs, and the modem processor mainly handles wireless communication signals, such as a baseband processor. It can be understood that the above modem processor may not be integrated into the processor 910.

The embodiment of the application also provides a readable storage medium, and a program or instruction is stored on the readable storage medium. When the program or instruction is executed by the processor, each process of the embodiment of the emoji image generation method can be realized, and the same technical effect can be achieved, so to avoid repetition, it is not repeated here.

The processor is the processor in the electronic device in the above embodiment. Readable storage media, including computer readable storage media, such as computer read-only memory (ROM), random access memory (RAM), magnetic disk or optical disk, etc.

The embodiment of the application also provides a chip, which includes a processor and a communication interface, the communication interface is coupled with the processor, and the processor is used for executing programs or instructions to realize various processes of the embodiment of the emoji image generation method, and the same technical effect can be achieved, so in order to avoid repetition, the details are not repeated here.

It should be understood that the chips mentioned in the embodiments of this application can also be called system on a chip, system chip, system chip or on-chip system chip, etc.

The embodiment of the present application provides a computer program product, which is stored in a storage medium and executed by at least one processor to realize the various processes of the embodiment of the emoji image generation method as described above, and can achieve the same technical effect, so to avoid repetition, it is not repeated here.

It should be noted that in this paper, the terms "comprising", "including" or any other variation thereof are intended to cover non-exclusive inclusion, so that a process, method, article or device including a series of elements includes not only those elements, but also other elements not explicitly listed, or elements inherent to such process, method, article or device. Without more restrictions, an element defined by the phrase "including one" does not exclude the existence of other identical elements in the process, method, article or device including the element. In addition, it should be pointed out that the scope of the methods and devices in the embodiments of the present application is not limited to performing functions in the order shown or discussed, but also can include performing functions in a substantially simultaneous manner or in the reverse order according to the functions involved. For example, the described methods can be performed in a different order from that described, and various steps can be added, omitted, or combined. In addition, features described with reference to some examples can be combined in other examples.

Through the description of the above embodiments, those skilled in the art can clearly understand that the methods of the above embodiments can be realized by means of software and necessary general hardware platform, and of course they can also be realized by hardware, but in many cases, the former is the better embodiment. Based on this understanding, the technical scheme of this application can be embodied in the form of a computer software product, which is stored in a storage medium (such as ROM/RAM, magnetic disk, optical disk) and includes several instructions to make a terminal (which can be a mobile phone, a computer, a server, or a network device, etc.) execute the methods of various embodiments of this application.

The embodiments of this application have been described above with the attached drawings, but this application is not limited to the above specific embodiments, which are only schematic, not restrictive. Under the inspiration of this application, ordinary technicians in this field can make many forms without departing from the purpose of this application and the scope protected by the claims, which are all within the protection of this application.

## Claims

1. An emoji image generation method wherein on a first user side, the method comprises:
receiving a first input in response to acquiring the initial media content, wherein the first input is configured for triggering generation of a first emoji, the first emoji is an emoji image generated based on the initial media content, the emoji image is configured for editing and/or sending target content, and the initial media content comprises a captured content and/or an uploaded content; and
displaying target information in response to the first input, wherein the target information is associated with the first emoji.

2. The emoji image generation method according to claim 1, wherein the method further comprises:
after displaying the target information, generating target media content on the basis of the initial media content in a media content generation interface; and
posting the target media content and/or sending the target media content to at least one second user in response to a determination operation on the target media content.

3. The emoji image generation method according to claim 2, wherein the receiving a first input in response to acquiring the initial media content comprises:
presenting the initial media content on the media content generation interface; and
confirming to receive the first input in response to a trigger operation on the media content generation interface.

4. The emoji image generation method according to claim 3, wherein the first input comprises a first sub-input and a second sub-input; the receiving a first input in response to acquiring the initial media content comprising:
receiving the first sub-input to a first control in the media content generation interface in response to displaying the initial media content on the media content generation interface;
displaying a second control in a content editing interface in response to the first sub-input; and
receiving a second sub-input to the second control, wherein the second control comprises an emoji addition control.

5. The emoji image generation method according to any one of claims 1 to 4, wherein the first emoji comprises a dynamic emoji image or a static emoji image.

6. The emoji image generation method according to any one of claims 1 to 5, wherein the initial media content comprises: a first video;
before displaying target information, the method further comprises:
generating the first emoji based on the first video, wherein the first emoji is a dynamic emoji image.

7. The emoji image generation method according to claim 6, wherein the generating the first emoji based on the first video comprises:
in response to that a video length of the first video is smaller than or equal to a preset length, determining a first dynamic image as the first emoji, and the first dynamic image is a dynamic image obtained by converting the first video.

8. The emoji image generation method according to claim 6, wherein the generating the first emoji based on the first video comprises:
in response to that a video length of the first video is greater than a preset length, determining a second video in the first video, wherein a video length of the second video is less than or equal to the preset length; and
determining a second dynamic image as the first emoji, wherein the second dynamic image is obtained by converting the second video.

9. The emoji image generation method according to claim 8, wherein the determining a second video in the first video comprises:
displaying the initial media content and a third control;
receiving a second input to the third control, the third control comprising a video cropping control; and
in response to the second input, clipping the second video in the first video.

10. The emoji image generation method according to any one of claims 1 to 5, wherein the method further comprises: generating the first emoji based on the initial media content.

11. The emoji image generation method according to claim 10, wherein the generating the first emoji based on the initial media content comprises:
displaying the target information and a fourth control, wherein the target information comprises an emoji image generated based on the initial media content;
receiving a third input to the fourth control, wherein the third input is configured for editing the emoji image; and
generating the first emoji based on the edited emoji image.

12. The emoji image generation method according to any one of claims 1 to 5, wherein the initial media content comprises at least one preset image;
before displaying the target information, the method further comprises:
determining at least one preset image as the first emoji, wherein a number of the first emojis is matched with a number of the preset images.

13. The emoji image generation method according to claim 12, wherein the number of the preset images is at least two;
the determining at least one preset image as the first emoji comprises:
determining a target image as the first emoji in response to a selection operation on the target image in at least two preset images, wherein the target image is at least one preset image in the at least two preset images.

14. The emoji image generation method according to any one of claims 1 to 5, wherein the initial media content comprises at least two preset images;
before displaying the target information, the method further comprises:
combining the at least two preset images into the first emoji, wherein the first emoji is a dynamic emoji image.

15. The emoji image generation method according to any one of claims 12 to 14, wherein the preset image comprises a static preset image or a dynamic preset image.

16. The emoji image generation method according to any one of claims 1 to 14, wherein after displaying the target information in response to the first input, the method further comprises:
storing the first emoji in a local storage area; and/or
adding the first emoji to an emoji panel, wherein the emoji panel is configured for generating the target content.

17. The emoji image generation method according to claim 16, wherein the target content comprises the emoji image, and the method further comprises:
generating the target content based on the first emoji in the emoji panel; and
sending the target content to at least one second user and/or posting the target content in response to a determination operation on the target media content.

18. An emoji image generation apparatus, wherein on a first user side, the emoji image generation apparatus comprises:
a receiving module configured for receiving a first input in response to acquiring the initial media content, wherein the first input is configured for triggering generation of a first emoji, the first emoji is an emoji image generated based on the initial media content, the emoji image is configured for editing and/or sending target content, and the initial media content comprises captured content and/or uploaded content;
a display module configured for displaying target information in response to the first input, wherein the target information is associated with the first emoji.

19. An electronic device, wherein the electronic device comprises:
a memory having a program or instructions stored thereon;
a processor, when executing the program or instructions, implementing steps of the emoji image generation method according to any one of claims 1 to 17.

20. A readable storage medium on which a program or instructions are stored, wherein the program or instructions, when executed by a processor, implement steps of the emoji image generation method according to any one of claims 1 to 17.

21. A computer program product comprising a computer program, wherein the computer program when executed by a processor implements steps of the emoji image generation method according to any one of claims 1 to 17.

22. A computer program, wherein the computer program, when executed by a processor, implements steps of the emoji image generation method according to any one of claims 1 to 17.
